# EUROPEAN PATENT APPLICATION

(11) **EP 2 481 989 A2**
(43) Date of publication of application: **01.08.2012**
(21) Application number: 12152420.1
(22) Date of filing: 25.01.2012
(51) Int. Cl.: F23R 7/00, F23N 5/00, F23N 1/08

(54) **Pulse detonation turbine engine using turbine shaft speed for monitoring combustor tube operation**

(30) Priority: 28.01.2011 US 201113015619
(71) Applicant: General Electric Company, Schenectady, NY 12345 (US)
(72) Inventor: Westervelt, Eric Richard, Niskayuna, NY New York 12309 (US); Rasheed, Adam, Niskayuna, NY New York 12309 (US); Walker, David, Niskayuna, NY New York 12309 (US)
(74) Representative: Williams, Andrew Richard

(57) **Abstract**

The present application provides a shaft speed monitoring system (240) for a pulse detonation combustor (100) with a number of combustion tubes (140) and positioned about a shaft (250) of a pulse detonation turbine engine (200). The shaft speed monitoring system (240) may include one or more shaft sensors (260) positioned about the shaft (250) and a control (270) in communication with the shaft sensors (260) to determine a number of shaft speed fluctuations (275) related to each of the combustion tubes (140).

## Description

### TECHNICAL FIELD

The present application relates generally to pulse detonation turbine engines and more particularly relates to a pulse detonation turbine engine using turbine shaft speed for prognostics and monitoring of a pulse detonation combustor and the individual combustion tubes therein.

### BACKGROUND OF THE INVENTION

Recent developments with pulse detonation combustors and engines have focused on practical applications such as generating additional thrust/propulsion for aircraft engines and to improve overall performance in ground-based power generation systems. Known pulse detonation combustors and engines generally operate with a detonation process having a pressure rise as compared to conventional engines operating with a constant pressure deflagration. Specifically, air and fuel are mixed within a pulse detonation chamber and ignited to produce a combustion pressure wave. The combustion pressure wave transitions into a detonation wave followed by combustion gases that produce thrust as they are exhausted from the engine. As such, pulse detonation combustors and engines have the potential to operate at higher thermodynamic efficiencies than generally may be achieved with conventional deflagration-based engines.

Monitoring the state of the pulse detonation combustors and the individual combustion tubes therein is important for load balancing of the pulse detonation turbine engine and for determining the overall health of the pulse detonation combustor. Currently, the only means for accessing the state of an individual combustion tube of a pulse detonation combustor is to position instrumentation directly within the combustion tube. Due to the extreme temperatures, pressures, and vibrations therein, however, such instrumentation within the combustion tubes may have a life significantly shorter than may be required for the commercial application of the overall pulse detonation turbine engine.

There is thus a desire for an improved pulse detonation turbine engine design. Such an improved design preferably would enable monitoring of the individual combustion tubes and the pulse detonation combustor as a whole without subjecting the instrumentation to the extreme temperatures, pressures, and vibrations generally present therein so as to provide a longer service lifetime with less downtime while maintaining accurate readings therein.

### SUMMARY OF THE INVENTION

The present application thus provides a shaft speed monitoring system for a pulse detonation combustor with a number of combustion tubes and positioned about a shaft of a pulse detonation turbine engine. The shaft speed monitoring system may include one or more shaft sensors positioned about the shaft and a control in communication with the shaft sensors to determine a number of shaft speed fluctuations related to each of the combustion tubes.

The present application further provides a method of monitoring the operation of a number of pulse detonation combustion tubes via shaft speed in a pulse detonation turbine engine. The method may include the steps of sensing the speed or acceleration of the shaft, determining a number of cycle groups of speed fluctuations based upon shaft speed over time, and comparing the cycle groups to determine variations therein.

The present application further provides a shaft speed monitoring system for a pulse detonation combustor with a number of combustion tubes and positioned about a shaft of a pulse detonation turbine engine. The shaft speed monitoring system may include one or more shaft sensors positioned about the shaft to determine the speed and/or the acceleration of the shaft and a control in communication with the shaft sensors to determine a number of cycle groups of shaft speed fluctuations over time related to each of the combustion tubes and to provide a feedback signal to the pulse detonation combustor.

These and other features and improvements of the present application will become apparent to one of ordinary skill in the art upon review of the following detailed description when taken in conjunction with the several drawings and the appended claims.

### BRIEF DESCRIPTION OF THE DRAWINGS

Fig. 1 is a side cross-sectional view of a known pulse detonation combustor.
Fig. 2 is a schematic view of a known pulse detonation turbine engine with a number of pulse detonation combustors.
Fig. 3 is a graph showing shaft speed fluctuations as a measure of shaft speed and time.
Fig. 4 is a graph showing shaft speed fluctuations as a measure of shaft speed and time.

### DETAILED DESCRIPTION

As used herein, the term "pulse detonation combustor" refers to a device or a system that produces both a pressure rise and a velocity increase from the detonation or quasi-detonation of a fuel and an oxidizer. The pulse detonation combustor may be operated in a repeating mode to produce multiple detonations or quasi-detonations within the device. A "detonation" may be a supersonic combustion in which a shock wave is coupled to a combustion zone. The shock may be sustained by the energy release from the combustion zone so as to result in combustion products at a higher pressure than the combustion reactants. A "quasi-detonation" may be a supersonic turbulent combustion process that produces a pressure rise and a velocity increase higher than the pressure rise and the velocity increase produced by a sub-sonic deflagration wave. For simplicity, the terms "detonation" or "detonation wave" as used herein will include both detonations and quasi-detonations.

Exemplary pulse detonation combustors, some of which will be discussed in further detail below, include an ignition device for igniting a combustion of a fuel/oxidizer mixture and a detonation chamber in which pressure wave fronts initiated by the combustion coalesce to produce a detonation wave. Each detonation or quasi-detonation may be initiated either by an external ignition source, such as a spark discharge, laser pulse, heat source, or plasma igniter, or by gas dynamic processes such as shock focusing, auto-ignition, or an existing detonation wave from another source (cross-fire ignition). The detonation chamber geometry may allow the pressure increase behind the detonation wave to drive the detonation wave and also to blow the combustion products themselves out an exhaust of the pulse detonation combustor. Other components and other configurations may be used herein.

Various combustion chamber geometries may support detonation formation, including round chambers, tubes, resonating cavities, reflection regions, and annular chambers. Such combustion chamber designs may be of constant or varying cross-section, both in area and shape. Exemplary combustion chambers include cylindrical tubes and tubes having polygonal cross-sections, such as, for example, hexagonal tubes. As used herein, "downstream" refers to a direction of flow of at least one of the fuel or the oxidizer.

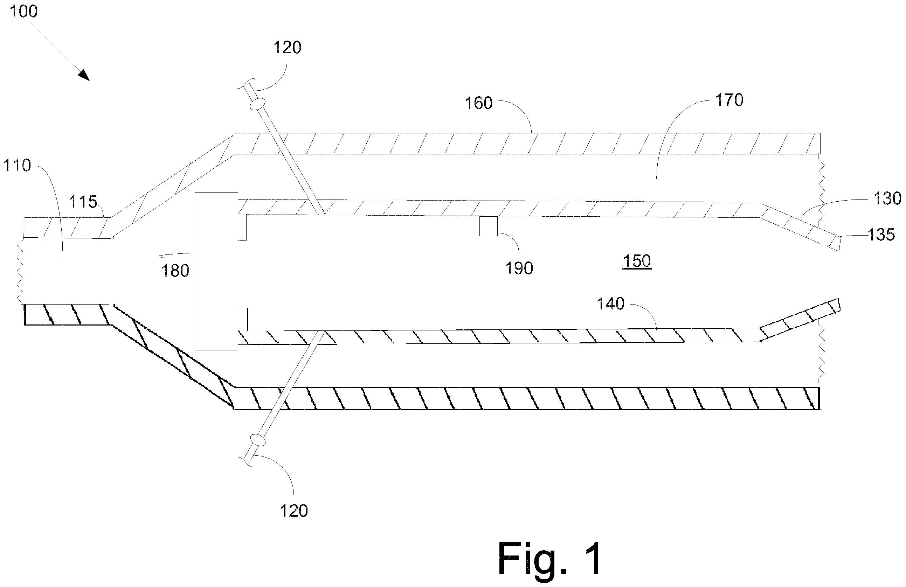

Referring now to the drawings, in which like numbers refer to like elements throughout the several views, Fig. 1 shows a generalized example of a pulse detonation combustor 100 as may be described and used herein. The pulse detonation combustor 100 may extend from an upstream head end 115 that includes an air inlet 110 and one or more fuel inlets 120 to an exit nozzle 130 at an opposed downstream end 135. A combustion tube 140 may extend from the head end 115 to the nozzle 130 at the downstream end 135. The combustion tube 140 defines a combustion zone 150 therein. A casing 160 may surround the combustion tube 140. The casing 160 may be in communication with the air inlet end 110 at the head end 115 and may extend to or beyond the nozzle 130 at the downstream end 135. The casing 160 and the combustion tube 140 may define a bypass duct 170 therebetween. Although only one combustion tube 140 is shown, any number may be used. Other components and other configurations may be used herein.

The air inlet 110 may be connected to a source of pressurized air such as a compressor. The pressurized air may be used to fill and purge the combustion chamber 150 and also may serve as an oxidizer for the combustion of the fuel. The air inlet 110 may be in communication with an air valve 180 and the combustion zone 150. Likewise, the fuel inlet 120 may be connected to a supply fuel that may be burned within the combustion zone 150. The fuel may be injected into the combustion zone 150 so as to mix with the airflow.

An ignition device 190 may be positioned downstream of the air inlet 110 and the fuel inlet 120. The ignition device 190 may be connected to a controller so as to operate the ignition device 190 at desired times and sequences as well as providing feedbacks signals to monitor operations. As described above, any type of ignition device 190 may be used herein. The fuel and the air may be ignited by the ignition device 190 into a combustion flow so as to produce the resultant detonation waves. A portion of the airflow also may pass through the bypass duct 170. This portion of the airflow may serve to cool the combustion tube 140, the combustion zone 150, and the nozzle 130. Other components and other configurations may be used herein. Any type of pulse detonation combustor 100 may be used herein.

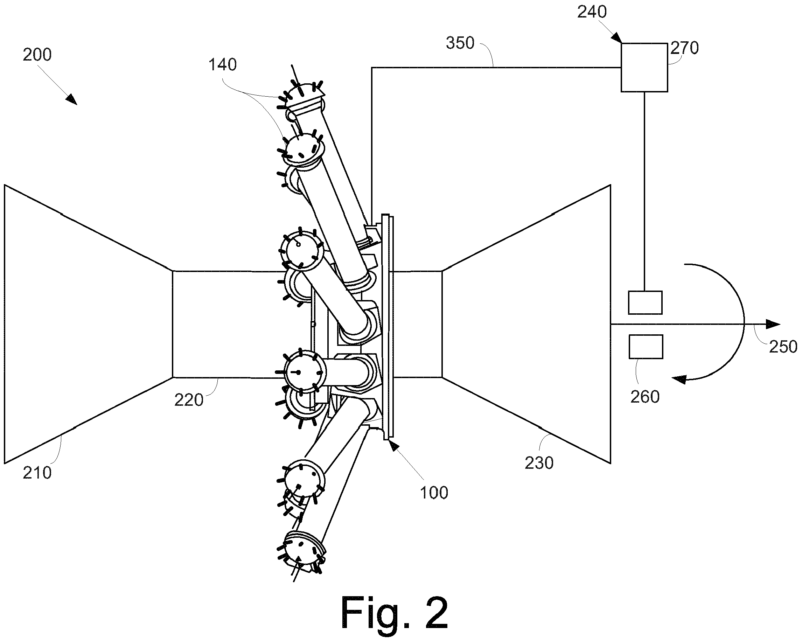

Fig. 2 shows a generalized example of a pulse detonation turbine engine 200 using the pulse detonation combustor 100. Generally described, the pulse detonation turbine engine 200 may include a compressor 210 to compress an incoming flow of air. The compressor 210 may be in communication with an inlet system 220 with a number of the air valves 180. Each inlet valve may be in communication with a combustion tube 140 as described above so as to mix the compressed flow of air with a compressed flow of fuel for combustion therein. The pulse detonation combustor 100 may be in communication with a turbine 230 via the nozzles 130 or other type of plenum. The hot combustion gases from the pulse detonation combustors 100 drive the turbine 230 so as to produce mechanical work. Other configurations and other components may be used herein. Any type of pulse detonation turbine engine 200 may be used herein with any type of pulse detonation combustor 100.

Fig. 2 also shows a shaft speed monitoring system 240. The mechanical work produced in the turbine 230 drives the compressor 210 via a shaft 250. The shaft 250 also may drive an external load such as an electrical generator and the like. The shaft speed monitoring system 240 may include a number of sensors 260 positioned about the shaft 250 so as to monitor the speed of the shaft 250 and hence the speed of the compressor 210 and the turbine 230. The sensors 260 may monitor shaft speed and/or acceleration. The sensor 260 may be of conventional design and may have enough time resolution to resolve shaft speed or acceleration fluctuations due to tube combustion cycles. The sensor 260 may be original equipment on the pulse detonation turbine engine 200.

The sensors 260 may be in communication with a control 270. The control 270 may monitor the output of the sensors 260 and the condition of the overall pulse detonation turbine engine 200 and the individual components thereof. The control 270 may be of conventional design and may be any type of programmable logic controller and the like. Multiple controls 270 may be used herein. Other types of control devices may be used herein. The shaft speed monitoring system 240 may use other components and other configurations.

The individual combustion tubes 140 of the pulse detonation combustor 100 within the overall pulse detonation turbine engine 200 generally pulse on a staggered basis. For example, the pulse detonation combustor 100 may have twelve (12) combustion tubes 140, although any number of combustion tubes 140 may be used. The goal herein is to ensure that each of the combustion tubes 140 is operating in a consistent manner. As such, the speed of the shaft 250 may be monitored by the shaft speed monitoring system 240 for combustion tube correlated variations in a number of speed fluctuations 275 via an appropriate algorithm.

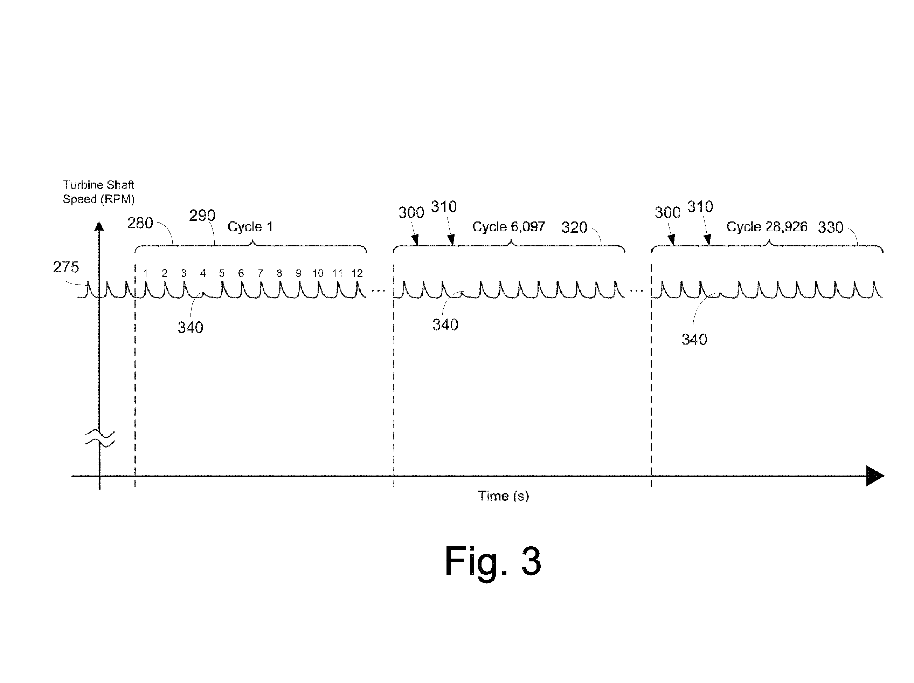

For example, Fig. 3 shows an example of the speed fluctuations 275 of the shaft 250 in terms of the speed of the shaft 250 in revolutions per minute with respect to time in seconds. Given the use of the pulse detonation combustor 100 with the twelve (12) combustion tubes 140, a number of twelve (12) speed fluctuation cycles may be evaluated. As is shown, a first cycle group 280 may be evaluated in a first window 290 and a number of further cycle groups 300 may be evaluated in a number of further windows 310. In this example, the further cycle group 300 may be cycle group 6,097 and may be evaluated in a second window 320. Likewise, a further cycle group 300 may be cycle 28,926 and may be evaluated in a third window 330. Any number of further cycle groups at any cycle number in any number of further windows 310 may be used herein.

As is shown in the example of Fig. 3, a fourth combustion tube 140 may be operating differently from the remaining combustion tubes 140 as indicated by the different speed fluctuation 340. This information may be used, for example, as a feedback signal 350 by the control 270 of the shaft speed monitoring system 240 to the pulse detonation combustor 100 or elsewhere within the pulse detonation turbine engine 200 and the like. The feedback signal 350 may promote balanced turbine loading by, for example, adjusting the time, fuel pressure, and/or inlet air mass flow of the fourth tube 140. Altering the inlet air mass flow may be done via adjustable restrictor plates or geometry so as to vary the effective area of the airflow path and the like. Such a variation may impact on any number of operational parameters such as fill fraction (the fraction of the combustion tube filled with the fuel-air mixture), purge fraction (the fraction of the combustion tube purged with unfueled air), fuel/air equivalence ratio, etc. Real time monitoring and feedback thus may be provided herein.

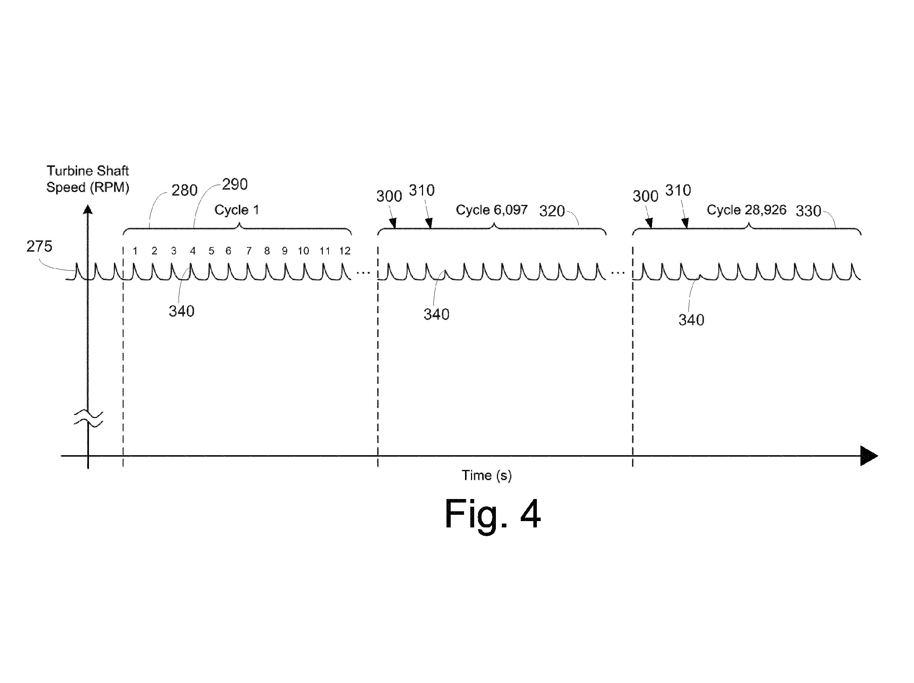

Fig. 4 shows a similar graph of the speed fluctuations 275 in terms of speed versus time. In this example, the change in the speed fluctuations 340 of the fourth combustion tube 140 shows that the operation of the fourth combustion tube 140 is deteriorating over time as compared to the remaining combustion tubes 140. Specifically, the speed fluctuations 275 are changing over time as compared to the first cycle group 280 in the first window 290 and the further cycle groups 300 in the further windows 310. This information may be used as part of a prognostic health monitoring system such that the shaft speed monitoring system 240 may estimate when tube failure may be likely to occur and also to schedule maintenance prior to such failure. Additionally, this information may be used to modify the operation of the combustion tube 140 to provide the same turbine loading therein as the other combustion tubes 140 until maintenance may be performed. Other components and other configurations may be used herein.

The control 270 of the shaft speed monitoring system 240 thus may use the speed and acceleration of the shaft 250 as determined by the sensors 260, along with an appropriate algorithm, to estimate or determine the operability of the pulse detonation combustor 100 and the individual combustion tubes 140 therein. This information may be used to predict failure modes for prognostic health monitoring, and to provide feedback to the overall control 270. Moreover, because shaft speed is already a sensed quantity, this monitoring approach does not add complexity or additional instrumentation. Likewise, the use of instrumentation within the combustion tubes 140 themselves may be avoided. Hence, the short lifetime thereof may be avoided while maintaining highly accurate monitoring herein.

It should be apparent that the foregoing relates only to certain embodiments of the present application and that numerous changes and modifications may be made herein by one of ordinary skill in the art without departing from the general scope of the invention as defined by the following claims and the equivalents thereof

Various aspects and embodiments of the invention are indicated in the following clauses:
1. A shaft speed monitoring system for a pulse detonation combustor with a number of combustion tubes and positioned about a shaft of a pulse detonation turbine engine, comprising:
   one or more shaft sensors positioned about the shaft; and
   a control in communication with the one or more shaft sensors to determine a plurality of shaft speed fluctuations related to each of the number of combustion tubes.
2. The shaft speed monitoring system of clause 1, wherein the one or more shaft sensors determine the speed and/or the acceleration of the shaft.
3. The shaft speed monitoring system of clause 1, wherein each of the number of combustion tubes is pulsed and wherein the one or more shaft sensors detect a shaft speed fluctuation caused thereby.
4. The shaft speed monitoring system of clause 1, wherein the control monitors a plurality of cycle groups of the shaft speed fluctuations over time.
5. The shaft monitoring system of clause 4, wherein the control monitors the plurality of cycle groups in a plurality of windows.
6. The shaft monitoring system of clause 1, wherein the control provides a feedback signal to the pulse detonation combustor.
7. The shaft monitoring system of clause 1, wherein each of the number of combustion tubes comprises a combustion zone therein.
8. The shaft monitoring system of clause 1, wherein the one or more shaft sensors comprise original equipment of the pulse detonation turbine engine.
9. A method of monitoring the operation of a number of pulse detonation combustion tubes via shaft speed in a pulse detonation turbine engine, comprising:
   sensing the speed or acceleration of the shaft;
   determining a plurality of cycle groups of speed fluctuations based upon shaft speed over time; and
   comparing the plurality of the cycle groups to determine variations therein.
10. The method of clause 9, wherein the plurality of cycle groups are compared within a plurality of windows.
11. The method of clause 9, wherein each speed fluctuation within a cycle group corresponds to one of the number of pulse detonation combustion tubes.
12. The method of clause 11, wherein a variation in one speed fluctuation of a cycle group indicates that the corresponding pulse detonation combustion tube is operating differently than the other combustion tubes.
13. The method of clause 11, wherein a variation in one speed fluctuation of a cycle group in a plurality of windows indicates that the corresponding pulse detonation combustion tube is operating differently than the other combustion tubes.
14. The method of clause 9, further comprising the step of generating one or more feedback signals to the pulse detonation turbine engine.
15. The method of clause 9, further comprising the steps of altering one or more pulse detonation combustion tube operational parameter based upon the determined variations.
16. The method of clause 15, wherein the step of altering one or more pulse detonation combustion tube operational parameters comprises altering an inlet air mass flow, a fill fraction, a purge fraction, and/or a fuel/air equivalence ratio.
17. The method of clause 9, further comprising the step of determining a likelihood of combustion tube failure based upon the determined variations.
18. The method of clause 9, further comprising the step of determining one or more combustion tube maintenance needs based upon the determined variations.
19. The method of clause 9, further comprising the step of determining one or more turbine loading needs based upon the determined variations.
20. A shaft speed monitoring system for a pulse detonation combustor with a number of combustion tubes and positioned about a shaft of a pulse detonation turbine engine, comprising:
   one or more shaft sensors positioned about the shaft to determine the speed and/or the acceleration of the shaft; and
   a control in communication with the one or more shaft sensors to determine a plurality of cycle groups of shaft speed fluctuations over time related to each of the number of combustion tubes and to provide a feedback signal to the pulse detonation combustor.

## Claims

1. A shaft speed monitoring system (240) for a pulse detonation combustor (100) with a number of combustion tubes (140) and positioned about a shaft (250) of a pulse detonation turbine engine (200), comprising:
one or more shaft sensors (260) positioned about the shaft (250); and
a control (270) in communication with the one or more shaft sensors (260) to determine a plurality of shaft speed fluctuations (275) related to each of the number of combustion tubes (140).

2. The shaft speed monitoring system (240) of claim 1, wherein the one or more shaft sensors (260) determine the speed and/or the acceleration of the shaft (250).

3. The shaft speed monitoring system (240) of either of claim 1 or 2, wherein each of the number of combustion tubes (140) is pulsed and wherein the one or more shaft sensors (260) detect a shaft speed fluctuation (275) caused thereby.

4. The shaft speed monitoring system (240) of any preceding claim, wherein the control (270) monitors a plurality of cycle groups (280, 300) of the shaft speed fluctuations (275) over time.

5. The shaft monitoring system (240) of claim 4, wherein the control (270) monitors the plurality of cycle groups (280, 300) in a plurality of windows (290, 310).

6. The shaft monitoring system (240) of any preceding claim, wherein the control (270) provides a feedback signal (350) to the pulse detonation combustor (100).

7. The shaft monitoring system (240) of any preceding claim, wherein each of the number of combustion tubes (140) comprises a combustion zone (150) therein.

8. The shaft monitoring system (240) of any preceding claim, wherein the one or more shaft sensors (260) comprise original equipment of the pulse detonation turbine engine (200).

9. A method of monitoring the operation of a number of pulse detonation combustion tubes (140) via shaft speed in a pulse detonation turbine engine (200), comprising:
sensing the speed or acceleration of the shaft (250);
determining a plurality of cycle groups (280, 300) of speed fluctuations (275) based upon shaft speed over time; and
comparing the plurality of the cycle groups (280, 300) to determine variations therein.

10. The method of claim 9, wherein the plurality of cycle groups (280, 300) are compared within a plurality of windows (290, 310).

11. The method of either of claim 9 or 10, wherein each speed fluctuation within a cycle group (280, 300) corresponds to one of the number of pulse detonation combustion tubes (140).

12. The method of claim 11, wherein a variation in one speed fluctuation of a cycle group (280, 300) indicates that the corresponding pulse detonation combustion tube (140) is operating differently than the other combustion tubes (140).

13. The method of claim 11, wherein a variation in one speed fluctuation of a cycle group (280, 300) in a plurality of windows (290, 310) indicates that the corresponding pulse detonation combustion tube (140) is operating differently than the other combustion tubes (140).

14. The method of any of claims 9 to 13, further comprising the step of generating one or more feedback signals (350) to the pulse detonation turbine engine (200).

15. The method of any of claims 9 to 14, further comprising the steps of altering one or more pulse detonation combustion tube operational parameter based upon the determined variations.
